# EUROPEAN PATENT APPLICATION

(11) **EP 4 501 765 A1**
(43) Date of publication of application: **05.02.2025**
(21) Application number: 23189738.0
(22) Date of filing: 04.08.2023
(51) Int. Cl.: B62J 9/23, A45F 3/04, A45F 4/02

(54) **BACKPACK**

(71) Applicant: Ucon Acrobatics GmbH, 10245 Berlin (DE)
(72) Inventor: FUSSENEGGER, Martin, 10247 Berlin (DE)
(74) Representative: Peterreins Schley

(57) **Abstract**

A backpack (10) is configured to be releasably coupled to a bicycle rack (21), wherein the bicycle rack (21) comprises at least one tube (30) having a substantially horizontally arranged tube section (31). The backpack (10) comprises a bag (100) comprising a rear face (120). The backpack (10) comprises a pair of shoulder straps (200a, 200b), wherein each shoulder strap (200a, 200b) comprises a lower end portion (210a, 210b) and an upper end portion (220a, 220b) which are respectively connected to the rear face (120). Furthermore, the backpack (10) comprises a pair of flexible coupling elements (300a, 300b), wherein a respective flexible coupling element (300a, 300b) is connected to the upper end portion (220a, 220b) of a respective shoulder strap (200a, 200b) and wherein each flexible coupling element (300a, 300b) is configured to be wound around the at least one tube (30) to releasably fasten the backpack (10) to the bicycle rack (21). Furthermore, the backpack (10) comprises a suspension element (400) connected to the rear face (120), wherein the suspension element (400) is configured to be engaged with the substantially horizontally arranged tube section (31) such that, when the suspension element (400) is engaged with the substantially horizontally arranged tube section (31), the backpack (10) is suspended vertically from and adjacent to the bicycle rack (21). The suspension element (400) is arranged adjacent to the pair of flexible coupling elements (300a, 300b) such that, when the suspension element (400) is engaged with the substantially horizontally arranged tube section (31), each flexible coupling element (300a, 300b) of the pair of flexible coupling elements (300a, 300b) can be wound around the at least one tube (30).

## Description

### TECHNICAL FIELD

The present disclosure relates to the field of wearable and/or carrying devices, more specifically to a backpack, a carrying system, and a use of a backpack for coupling the backpack to a carrying device.

### BACKGROUND

In the technical field of wearable and/or carrying devices, backpacks are known which can have different sizes, shapes and/or features. Known backpacks comprise a bag with an opening into which various articles can be inserted and/or stored. The bag may comprise one or more additional pockets or compartments, which may be provided either open or closable (e.g., via a zipper). Known backpacks typically have two shoulder straps sewn at their respective ends to a rear face (or back side) of the bag. To wear the backpack, the wearer slides the respective shoulder straps over his/her shoulders, with the rear face of the bag contacting the wearer's back. Instead of wearing the backpack by a wearer, backpacks can also be coupled to and carried (or transported) by other devices, e.g., movable devices like a bicycle.

Carrying devices like a bicycle may have at least one bicycle rack (i.e., a luggage carrier of a bicycle) to which a bag device, more specifically a backpack, may be releasably coupled. Known backpacks may have a wearing state, in which the backpack may be worn on a wearer's back and a transport state, in which the backpack may be coupled to the bicycle rack. Such backpacks may have rigid coupling systems that may require stowage in the backpack in the wearing state (e.g., in zippered pockets of the backpack that have a soft material to cover rigid coupling elements) in order to provide the necessary comfort for a user when wearing the backpack on their back. In the transport state, it may be required to expose the rigid coupling systems to couple the backpack to the bicycle rack. Furthermore, in known backpacks the shoulder straps may have to be detached and/or stowed in the backpack (e.g., in pockets that can be closed by a zipper) due to safety reasons. Thereby, the risk of the shoulder straps negatively interfering with other devices (e.g. the spokes of a bicycle) may be reduced. Known backpacks may also have coupling systems that are difficult to handle because several steps are required (especially with both hands of a user) to successfully couple the backpack to the bicycle rack. Thus, known backpacks may have coupling systems with which it is complicated and/or time-consuming for a user (or wearer) to couple the backpack to a bicycle rack, and which may have poor ergonomics.

Thus, the object of the present disclosure is to provide an improved backpack, and more specifically which can be releasably coupled to another device (particularly a bicycle rack) with improved ergonomics.

### SUMMARY

The present disclosure relates to a backpack as defined in claim 1, a carrying system as defined in claim 14, and a use of a backpack for coupling the backpack to a carrying device as defined in claim 15. The dependent claims represent advantageous embodiments of the present disclosure.

According to a first aspect of the present disclosure, a backpack is configured to be releasably coupled to a bicycle rack, wherein the bicycle rack comprises at least one tube having a substantially horizontally arranged tube section. The backpack comprises a bag comprising a rear face. Furthermore, the backpack comprises a pair of shoulder straps, wherein each shoulder strap comprises a lower end portion and an upper end portion which are respectively connected to the rear face. The backpack comprises a pair of flexible coupling elements, wherein a respective flexible coupling element is connected to the upper end portion of a respective shoulder strap and wherein each flexible coupling element is configured to be wound around the at least one tube to releasably fasten the backpack to the bicycle rack. Furthermore, the backpack comprises a suspension element connected to the rear face, wherein the suspension element is configured to be engaged with the substantially horizontally arranged tube section such that, when the suspension element is engaged with the substantially horizontally arranged tube section, the backpack is suspended vertically from and adjacent to the bicycle rack. The suspension element is arranged adjacent to the pair of flexible coupling elements such that, when the suspension element is engaged with the substantially horizontally arranged tube section, each flexible coupling element of the pair of flexible coupling elements can be wound around the at least one tube.

The bicycle rack may also be defined as a luggage carrier of a bicycle or a bicycle carrier. The rear face may be adapted for contacting a user's (or wearer's) back. The suspension element may be at least one first suspension element. The provision of the suspension element and the pair of flexible coupling elements may allow for improved ergonomics, particularly when coupling the backpack to the bicycle rack. Furthermore, a simplified and/or secure coupling of the backpack to the bicycle rack may be provided.

Each flexible coupling element is configured to be wound around the at least one tube. Thereby, the backpack can be releasably coupled to the bicycle rack, and a secure and/or facilitated coupling of the backpack to the bicycle rack may be provided. When the backpack is coupled to the bicycle rack (i.e., the flexible coupling elements are wound around the at least one tube), the flexible coupling elements can reduce or prevent slippage and/or movement of the backpack relative to the bicycle rack during transport. Furthermore, since the flexible coupling elements are flexible, improved ergonomics can be provided when the backpack is worn by a user (in comparison to rigid coupling elements). In more detail, instead of providing rigid coupling systems that must be stowed in the wearing state and exposed in the transport state in a complicated manner as in the prior art, the backpack according to the first aspect of the present disclosure has flexible coupling elements that are (directly) connected to the shoulder straps. When coupling the backpack to the bicycle rack, the coupling elements are easily accessible and fewer steps are required for coupling the backpack to the bicycle rack. This may lead to improved ergonomics in the wearing state, in the transport state and/or during coupling of the backpack to the bicycle rack. Furthermore, additional components like zippered pockets for rigid coupling systems and/or shoulder straps in the backpack can be dispensed with, resulting in lower costs of the backpack.

The suspension element may allow the bag to be vertically suspended from and adjacent to the bicycle rack when engaged with the substantially horizontal tube section. Thereby, a facilitated and improved handling during coupling of the backpack to the bicycle rack may be provided (e.g., when winding the flexible coupling elements around the at least one tube to releasably fasten the backpack to the bicycle rack). The suspension element may allow the user to use both hands for further coupling/fastening operations or steps (e.g., the handling of the flexible coupling elements). As the suspension element is arranged adjacent to the flexible coupling elements, the user may simply engage the suspension element with the substantially horizontally arranged tube section such that the backpack is vertically suspended from and adjacent to the bicycle rack, and may then wind the flexible coupling elements around the at least one tube (e.g., the same tube section with which the suspension element is engaged) to fasten the backpack to the bicycle rack (by using both hands which is possible due to the provision of the suspension element). This arrangement may allow for improved ergonomics when coupling the backpack to the bicycle rack and/or when wearing the backpack, as well as for a facilitated and/or secure coupling of the backpack to the bicycle rack.

In embodiments, the respective flexible coupling element may be connected to the respective upper end portion such that, when the suspension element is engaged with the substantially horizontally arranged tube section, each flexible coupling element of the pair of flexible coupling elements can be wound around the substantially horizontally arranged tube section with which the suspension element is engageable.

In embodiments, the respective flexible coupling element may be connected to a side of the respective shoulder strap which faces away from the rear face. More specifically, the bag may comprise a bottom edge and a top edge, wherein the pair of flexible coupling elements may be positioned closer to the top edge than to the bottom edge.

In embodiments, each flexible coupling element may comprise a connection portion and a foldable portion, wherein a respective connection portion may be connected to the respective upper end portion and wherein a respective foldable portion may be configured to be releasably coupled with the respective connection portion. More specifically, the respective foldable portion may be configured to be releasably coupled with the respective connection portion via a hook-and-loop fastener.

In embodiments, the backpack may comprise a pair of eyelets connected to the rear face. More specifically, a respective eyelet of the pair of eyelets may be positioned between the respective upper end portion and a top edge of the bag.

In embodiments, the respective eyelet may be positioned on the rear face relative to the respective flexible coupling element such that the respective flexible coupling element is translatable through and engageable with the respective eyelet.

In embodiments, the respective eyelet may be positioned on the rear face relative to the respective flexible coupling element such that, when the backpack is releasably fastened to the at least one tube, the at least one tube is arranged between the respective upper end portion and the respective eyelet. More specifically, the respective flexible coupling element may be wound around the at least one tube and engaged with the respective eyelet such that the at least one tube may be clamped to the rear face.

In embodiments, the suspension element may comprise a suspension hook portion and a suspension strap portion. The suspension strap portion may connect the suspension hook portion to the rear face. The suspension strap portion may be elastically deformable.

In embodiments, the suspension element may be positioned on the rear face between the upper end portions, more specifically between the pair of flexible coupling elements.

In embodiments, the backpack may further comprise at least one securing element connected to the rear face. The at least one securing element may be positioned on the rear face below the suspension element and closer to the bottom edge of the bag than to the top edge of the bag.

In embodiments, the substantially horizontally arranged tube section may be a first tube section and wherein the at least one tube may comprise at least one second tube section arranged substantially vertically below the first tube section. The at least one securing element may be configured to be engaged with the at least one second tube section such that, when the suspension element is engaged with the first tube section and the at least one securing element is engaged with the at least one second tube section, the backpack may be suspended vertically from and pulled towards the bicycle rack.

In embodiments, the at least one securing element may comprise a securing hook portion and a securing strap portion. The securing strap portion may connect the securing hook portion to the rear face. The securing strap portion may be elastically deformable.

In embodiments, the bag may comprise a pair of third pockets on the rear face (120). A respective third pocket of the pair of third pockets may be arranged adjacent to a respective side face of the bag and adjacent to a bottom edge of the bag. More specifically, the respective third pocket may be configured to receive at least a portion of a respective shoulder strap of the pair of shoulder straps.

According to a second aspect of the present disclosure, a carrying system comprises a bicycle comprising a bicycle rack, and a backpack according to the first aspect of the present disclosure. The backpack is releasably coupled to the bicycle rack. More specifically, the backpack may be suspended vertically from and adjacent to the bicycle rack via (or by means of) the suspension element. The backpack may be releasably fastened to the bicycle rack via (or by means of) the pair of flexible coupling elements. Such a carrying system comprises the effects and advantages as outlined above for the first aspect of the present disclosure. Due to the features of the suspension element and the pair of flexible coupling elements, improved ergonomics may be provided. Furthermore, a simplified and/or secure coupling of the backpack to the bicycle rack may be provided. In addition, the carrying system may provide a safe transport of the backpack with the bicycle.

A third aspect of the present disclosure relates to the use of a backpack according to the first aspect of the present disclosure for coupling the backpack to a carrying device, more specifically to a bicycle rack.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1A**: is a rear view of a backpack according to the present disclosure;
- **Fig. 1B**: is a rear-perspective view of the backpack according to the present disclosure;
- **Figs. 1C**: is a left-side view of the backpack according to the present disclosure with shoulder straps in a wearing position;
- **Fig. 1D**: is a left-side view of the backpack according to the present disclosure with shoulder straps in a transport position;
- **Fig. 2A**: is a rear view of the backpack according to the present disclosure with a de-assembled shoulder strap and securing element;
- **Fig. 2B**: is a schematic view of a flexible coupling element and an eyelet of the backpack according to the present disclosure in a decoupled state;
- **Fig. 2C**: is a schematic view of the suspension element of the backpack according to the present disclosure;
- **Fig. 2D**: is a front view of the backpack according to the present disclosure;
- **Figs. 3A and 3B**: are schematic views of a carrying system according to a second aspect of the present disclosure, wherein the backpack is coupled to a bicycle rack;
- **Figs. 4A to 4C**: are schematic views of a flexible coupling element, an eyelet, a suspension element and a securing element in a coupled state of the backpack according to the present disclosure;
- **Figs. 5A to 5G**: illustrate the coupling steps of the backpack to the bicycle rack from a decoupled state to a coupled state.

### DETAILED DESCRIPTION

Embodiments of the backpack, the carrying system and the use of the backpack according to the present disclosure will be described in reference to the drawings as follows.

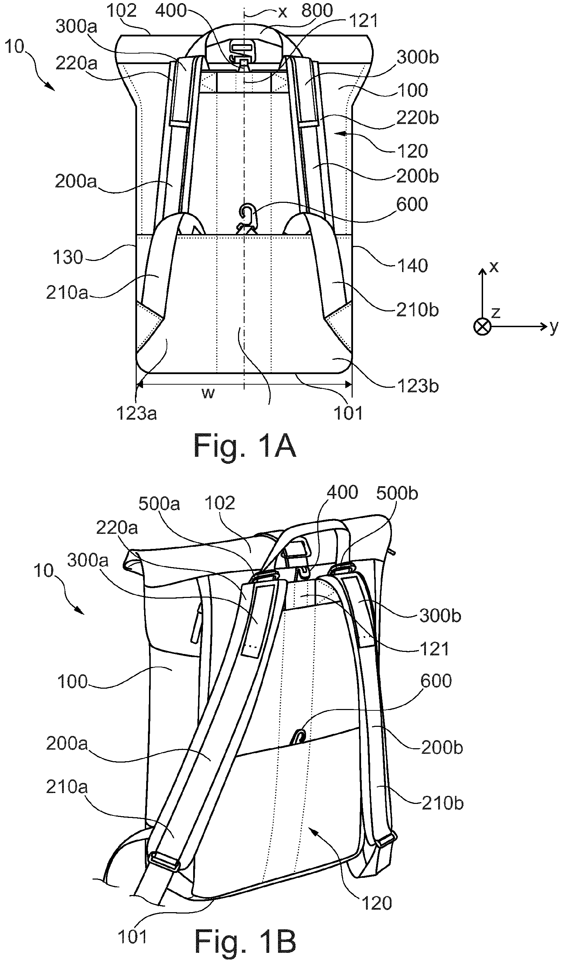

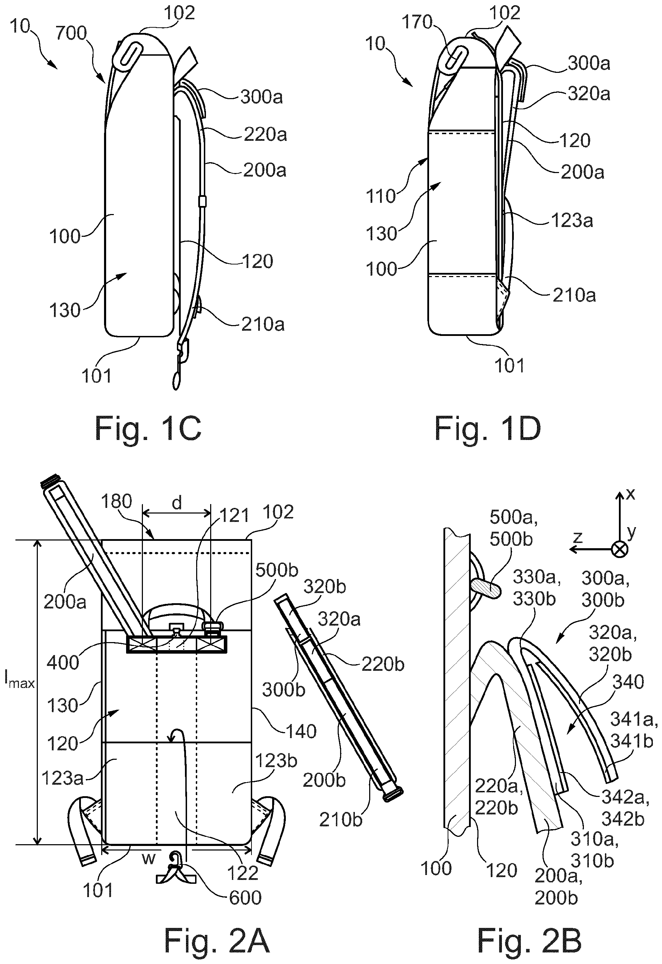

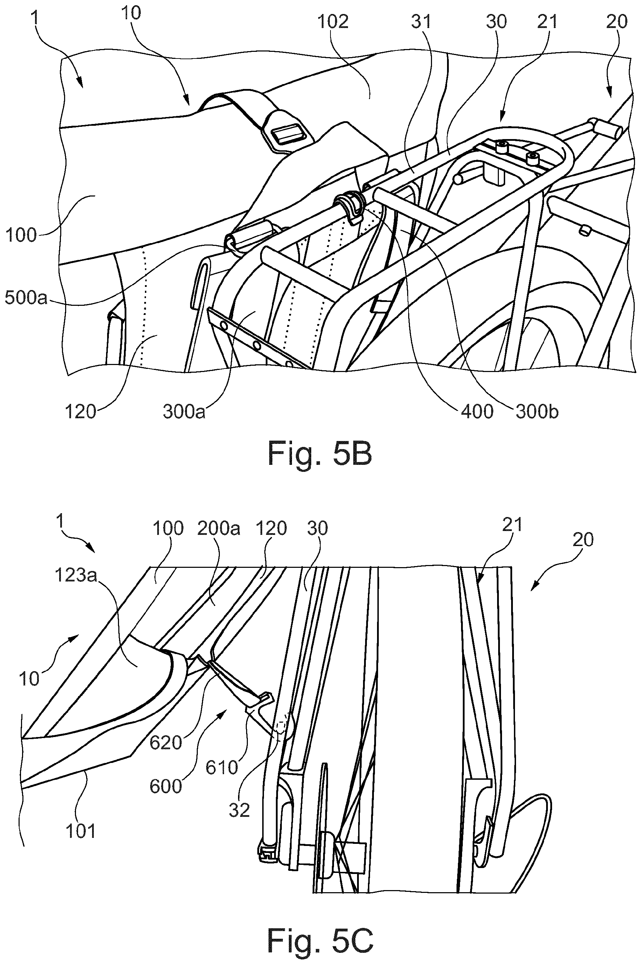

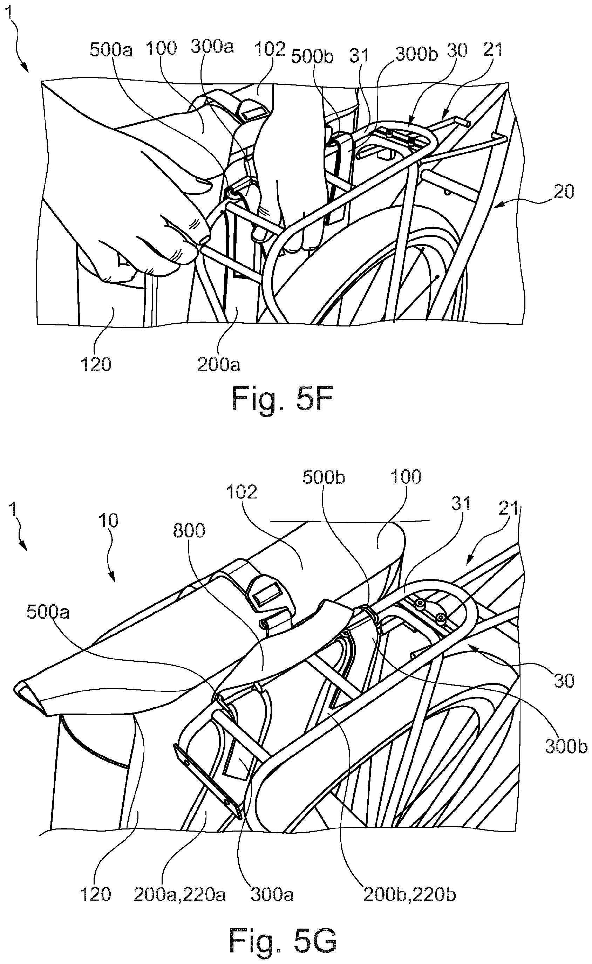

Figs. 1A to 1D are a front view, a rear view, a left-perspective rear view and a left-side view of a bag device, more specifically a backpack 10, according to a first aspect of the present disclosure. The backpack 10 is configured to be releasably coupled to carrying device, more specifically to a bicycle rack 21. The bicycle rack 21 comprises at least one tube 30 having a substantially horizontally arranged tube section 31 (as shown, e.g., in Fig. 5B and which will be described in more detail below). The backpack 10 comprises a bag 100 comprising a rear face 120. The backpack 10 may comprise a pair of shoulder straps 200a, 200b. Each shoulder strap 200a, 200b may comprise a lower end portion 210a, 210b and an upper end portion 220a, 220b which are respectively connected to the rear face 120. Furthermore, the backpack 10 comprises a pair of flexible coupling elements 300a, 300b. A respective flexible coupling element 300a, 300b may be connected to the upper end portion 220a, 220b of a respective shoulder strap 200a, 200b. Each flexible coupling element 300a, 300b is configured to be wound around the at least one tube 30 to releasably fasten the backpack 10 to the bicycle rack 21. Furthermore, the backpack 10 comprises a suspension element 400 connected to the rear face 120. The suspension element 400 is configured to be engaged with the substantially horizontally arranged tube section 31 such that, when the suspension element 400 is engaged with the substantially horizontally arranged tube section 31, the backpack 10 is suspended vertically from and adjacent to the bicycle rack 21. The suspension element 400 is arranged adjacent to the pair of flexible coupling elements 300a, 300b such that, when the suspension element 400 is engaged with the substantially horizontally arranged tube section 31, each flexible coupling element 300a, 300b of the pair of flexible coupling elements 300a, 300b can be wound around the at least one tube 30.

The bicycle rack 21 may also be defined as a luggage carrier of a bicycle or a bicycle carrier. The rear face 120 may be adapted for contacting a user's (or wearer's) back. In embodiments, more than one suspension elements 400 may be provided. The provision of the suspension element 400 and the pair of flexible coupling elements 300a, 300b may allow for improved ergonomics, particularly when coupling the backpack 10 to the bicycle rack 21. Furthermore, a simplified and/or secure coupling of the backpack 10 to the bicycle rack 21 may be provided. In some embodiments, only one flexible coupling element 300a, 300b may be provided. However, the provision of a pair of flexible coupling elements 300a, 300b as described herein may lead to a secure and/or facilitated coupling of the backpack 10 to the bicycle rack 21. In some embodiments, at least two flexible coupling elements 300a, 300b may be provided. In examples, additional flexible coupling elements (i.e., in addition to the pair of flexible coupling elements 300a, 300b) may be provided and arranged adjacent to the pair of flexible coupling elements 300a, 300b as described herein.

As outlined above, each flexible coupling element 300a, 300b is configured to be wound around the at least one tube 30. Thereby, the backpack 10 can be releasably fastened to the bicycle rack 21, and a secure and/or facilitated coupling of the backpack 10 to the bicycle rack 21 may be provided. When the backpack 10 is fastened to the bicycle rack 21 (i.e., the flexible coupling elements 300a, 300b are wound around the at least one tube 30), the flexible coupling elements 300a, 300b may allow for reduced or prevented slippage and/or movement of the backpack 10 relative to the bicycle rack 21 during transport. Furthermore, since the flexible coupling elements 300a, 300b are flexible, improved ergonomics can be provided when the backpack 10 is worn by a user or wearer (in comparison to rigid coupling systems). In more detail, instead of providing rigid coupling systems that must be stowed in the wearing state and exposed in the transport state in a complicated manner as in the prior art, the backpack 10 according to the first aspect of the present disclosure has flexible coupling elements 300a, 300b that are (directly) connected to the shoulder straps 200a, 200b. Instead of detaching and/or stowing the shoulder straps in zippered pockets provided in the backpack as in the prior art, the flexible coupling elements 300a, 300b connected to the upper end portions 220a, 220b of the backpack 10 according to the present disclosure may be used to couple the backpack 10 to the bicycle rack 21. When coupling the backpack 10 to the bicycle rack 21, the coupling elements 300a, 300b are easily accessible and fewer steps are required for coupling the backpack 10 to the bicycle rack 21. This may lead to improved ergonomics in the wearing state, in the transport state and/or during coupling of the backpack 10 to the bicycle rack 21. Furthermore, additional components like zippered pockets for rigid coupling systems and/or shoulder straps in the backpack can be dispensed with, resulting in lower costs of the backpack 10.

The suspension element 400 may allow the bag 100 to be vertically suspended from and adjacent to the bicycle rack 21 when engaged with the substantially horizontal tube section 31. Thereby, a facilitated and improved handling during coupling of the backpack 10 to the bicycle rack 21 may be provided (e.g., when winding the flexible coupling elements 300a, 300b around the at least one tube 30 to releasably fasten the backpack 10 to the bicycle rack 21). The suspension element 400 may allow the user to use both hands for further coupling/fastening operations or steps (e.g., the handling of the flexible coupling elements 300a, 300b). As the suspension element 400 is arranged adjacent to the flexible coupling elements 300a, 300b, the user may simply engage the suspension element 400 with the substantially horizontally arranged tube section 31 such that the backpack 10 is vertically suspended from and adjacent to the bicycle rack 21, and may then wind the flexible coupling elements 300a, 300b around the at least one tube 30 (e.g., the same tube section 31 with which the suspension element 400 is engaged) to fasten the backpack 10 to the bicycle rack 21 (more specifically, by using both hands which is possible due to the engagement of the suspension element 400). This arrangement may allow for improved ergonomics when coupling the backpack 10 to the bicycle rack 21 and/or when wearing the backpack 10, as well as for a facilitated and/or secure coupling of the backpack 10 to the bicycle rack 21.

In some embodiments, the respective flexible coupling element 300a, 300b may be connected to the respective upper end portion 220a, 220b such that, when the suspension element 400 is engaged with the substantially horizontally arranged tube section 31, each flexible coupling element 300a, 300b of the pair of flexible coupling elements 300a, 300b can be wound around the substantially horizontally arranged tube section 31 with which the suspension element 400 is engageable. This may lead to improved ergonomics, as the suspension element 400 and the flexible coupling elements 300, 300b are arranged close with respect to each other which may allow easier handling for a user during coupling. More specifically, each flexible coupling element 300a, 300b can be wound around the same substantially horizontally arranged tube section 31 with which the suspension element 400 is engaged (or engageable with).

As shown, e.g., in Figs. 1A to 1D, the bag 100 has a front face 110, the rear face 120, a left-side face 130, and a right-side face 140. As outlined above, the rear face 120 may be the face which may contact a wearer's back when the backpack 10 is worn. The front face 110 is the face which extends on a opposite side of the bag 100 with respect to the rear face 120. Viewing the rear face 120, the left-side face 130 may be on a left side of the bag 100 and the right-side face 140 may be on the right side of the bag 100. Left-side face 130 and right-side face 140 may extend between the front face 110 and the rear face 120, respectively. An adjacent face 130, 140 may be an adjacent side face 130, 140 of the bag 100, i.e., the left-side face 130 and/or the right-side face 140.

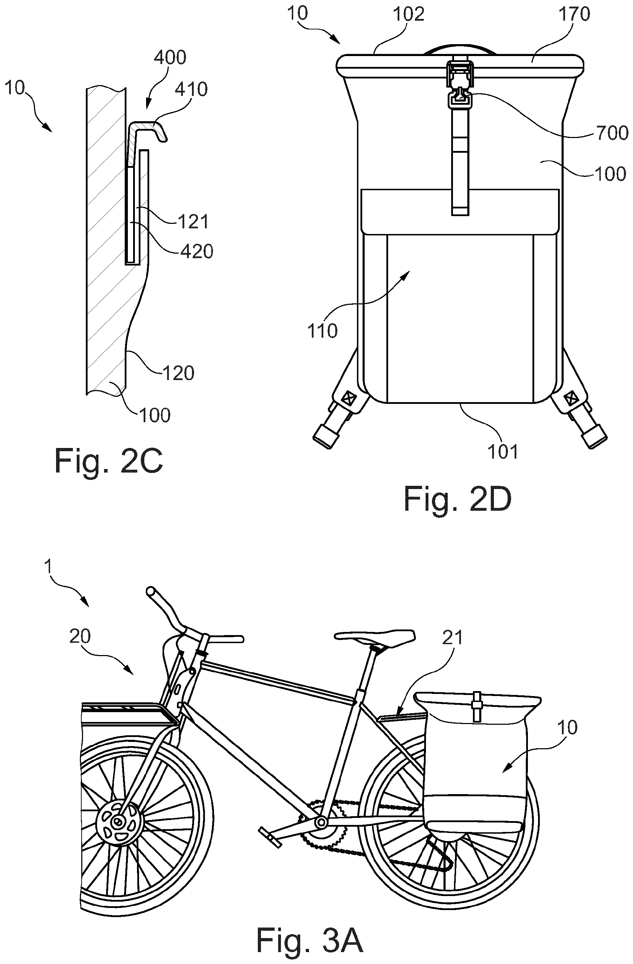

Viewing the rear face 120 in Fig. 1A, the pair of shoulder straps 200, 200b may comprise a left (or first) shoulder strap 200a being connected to the rear face 120 adjacent the left-side face 130. The pair of shoulder straps 200b may comprise a right (or second) shoulder strap 200b being connected to the rear face 120 adjacent the right-side face 140. As indicated in Fig. 1A, the backpack 10 comprises a longitudinal axis x, which extends in a longitudinal direction of the bag 100. A perpendicular axis y is defined perpendicular to the longitudinal axis x and extends in a width direction of the bag 100 (i.e., in a direction from left-side face towards right-side face). A thickness axis z is defined perpendicular to the longitudinal axis x and the perpendicular axis y, and the thickness axis z extends in a thickness direction of the bag 100. Referring to Fig. 1A, the backpack 10 comprises a top edge 102 and a bottom edge 101. The bottom edge 101 may be arranged at a bottom of the bag 100, more specifically between the bottom of the bag 100 and the respective faces 110, 120, 130, 140 of the bag 100. The top edge 102 may be on an opposite side of the bag 100 with respect to the bottom edge 101. The bag 100 may comprise an opening 180 (not shown in Figs. 1A to 1D but indicated in Fig. 2A) which can be closed by means of a closure device 700, i.e., which may be configured to close the opening 180 or keep opening 180 closed. The top edge 102 may be proximate the opening 180. Fig. 2D is a front view of the backpack 10. As indicated in Figs. 1D and 2D, the backpack may comprise a foldable part 170 arranged adjacent the top edge 102. The foldable part 170 may be movable between a folded position (see, e.g., Fig. 1D), and an unfolded position (see, e.g., Fig. 2A). In the folded position, the opening 180 may be closed. The closure device 700 may be configured to retain the foldable part in the folded position (i.e., to keep the opening 180 closed).

The upper end portions 220a, 220b may be arranged proximate to the top edge 102 and distal to the bottom edge 101. The lower end portions 210a, 210b may be arranged proximate to the bottom edge 101 and distal to the top edge 102. When worn by a user (or wearer), the respective upper end portion 220a, 220b may be arranged proximate to a wearer's shoulder and the lower end portion 210a, 210b may be arranged distal to a wearer's shoulder. In other words, the upper end portions 220a, 220b may refer to ends of the respective each shoulder strap 200a, 200b which are disposed proximate to the opening 180 and/or the top edge 102 of the bag 100. The lower end portion 210a, 210b may refer to ends of the respective each shoulder strap 200a, 200b disposed proximate to the bottom edge 101 of the bag 100. As described above, the respective flexible coupling element 300a, 300b is connected to a respective upper end portion 220a, 220b. Thus, the pair of flexible coupling elements 300a, 300b may be positioned closer to the top edge 102 than to the bottom edge 101. The respective flexible coupling element 300a, 300b may be connected to a side of the respective shoulder strap 200a, 200b facing away from the rear face 120, more specifically in a transport position of the shoulder straps 200a, 200b which will be described below. The upper end portions 220a, 220b are connected to the rear face 120 at a position closer to the top edge 102 than to the bottom edge 101. The pair of flexible coupling elements 300a, 300b are connected to the rear face 120 via the respective upper end portions 220a, 220b. The respective flexible coupling element 300a, 300b may be connected to the respective upper end portion 220a, 220b at a position adjacent to a respective upper connection area at which the respective upper end portion 220a, 220b is connected to the rear face 120. As indicated in Figs. 1A and 2A, the upper end portions 220a, 220b and the pair of flexible coupling elements 300a, 300b are distanced from each other by a distance d, which may be measured between respective centres of the respective upper connection areas, particularly in the direction of the perpendicular axis y. The bag 100 comprises a width w measured between respective side faces 130, 140, particularly in the direction of the perpendicular axis y. The width w may be a maximum width of the bag 100 measured between the respective side faces 130, 140. In some embodiments, a ratio of the distance d and the width w may be from 0,3 to 0,7, more specifically from 0,4 to 0,6. The ratio as described above may improve wearing comfort.

Referring to Figs. 1A to 1D, each shoulder strap 200a, 200b may comprise a lower portion comprising the lower end portion 210a, 210b, and an upper portion comprising the upper end portion 220a, 220b and an intermediate portion. The intermediate portion may extend between the upper end portion 220a, 220b and an intermediate end opposite the upper end portion 220a, 220b. The lower portion may be fixedly connected to the rear face 120 at the lower end portion 210a, 210b. In some embodiments, the lower portion may comprise an end opposite the lower end portion 210a, 210b. The lower portion may be releasably and/or adjustably coupled to the upper portion, more specifically to the intermediate portion, at the end opposite the lower end portion 210a, 210b.

Fig. 2A is a schematic view of the backpack 10, with de-assembled shoulder straps 200a, 200b and a de-assembled securing element 600. Fig. 2B is a detailed view of one upper end portion 220a, 220b and flexible coupling element 300a, 300b. Referring to Figs. 1A, 1B, 2A and 2B, each flexible coupling element 300a, 300b of the pair of coupling elements 300a, 300b may comprise a hook-and-loop fastener 340. Each flexible coupling element 300a, 300b may comprise a connection portion 310a, 310b and a foldable portion 320a, 320b. As shown in Fig. 2B, a respective connection portion 3 10a, 310b is connected to the respective upper end portion 220a, 220b. A respective foldable portion 320a, 320b may be configured to be releasably coupled with the respective connection portion 310a, 310b. In embodiments, the respective foldable portion 320a, 320b may be configured to be releasably coupled with the respective connection portion 310a, 310b via the hook-and-loop fastener 340. The hook-and-loop fastener 340 may comprise a first band 341a, 341b connected to the respective foldable portion 320a, 320b and a second band 342a, 342b connected to the respective connection portion 310a, 310b. One of the first band 341a, 341b and the second band 342a, 342b may comprise a plurality of hooks and the other one may comprise a plurality of loops releasably couplable to the plurality of hooks. As shown, the respective flexible coupling element 300a, 300b may be folded such that, when coupled, the respective foldable portion 320a, 310b may be arranged substantially parallel to the connection portion 310a, 310b. When coupled, an end of the respective foldable portion 320a, 320b opposite the end at which the respective foldable portion is connected to the connection portion may be directed towards the bottom edge 101 and/or may be closer to the bottom edge 101 than the opposite end. The respective flexible coupling element 300a, 300b may define an intermediate coupling portion 330a, 330b, which may be arranged between the respective foldable portion 320a, 320b and the respective connection portion 310a, 310b. When coupled, the respective intermediate coupling portion 330a, 330b may define a loop configured to retain a portion of an eyelet 500a, 500b, which will be described in detail below. The intermediate coupling portion 330a, 330b may be free of the hook-and-loop fastener 340. When coupled, the loop may be closed by the engagement of the hook-and-loop fastener 340 provided on the respective foldable portion 320a, 320b and the respective connection portion 310a, 310b.

Referring to Figs. 1B, 2A and 2B, the backpack 10 may comprise a pair of eyelets 500a, 500b connected to the rear face 120. A respective eyelet 500a, 500b of the pair of eyelets 500a, 500b may be positioned between the respective flexible coupling element 300a, 300b and the top edge 102 of the bag 100. Additionally or alternatively, the respective eyelet 500a, 500b may be positioned between the respective upper end portion 220a, 220b and the top edge 102 of the bag 100. In other words, in the longitudinal direction x of the backpack 10, the respective eyelet 500a, 500b may be positioned between the respective flexible coupling element 300a, 300b and/or respective upper end portion 220a, 220b, and the top edge 102. In other words, the respective eyelet 500a, 500b may be positioned above the respective flexible coupling element 300a, 300b. Each eyelet 500a, 500b may be provided as a D-shaped ring element.

As shown, e.g., in Figs. 1B and 2B, the backpack 10 may comprise a carrying handle 800 connected to the rear face 120 adjacent the top edge 102 of the bag 100. The carrying handle 800 may be connected to the rear face 120 at respective end portions of the carrying handle 800. More specifically, the carrying handle 800 may be connected to the rear face 120 adjacent to the respective upper connection area at which the respective upper end portion 220a, 220b is connected to the rear face 120. The respective ends of the carrying handle 800 may be sandwiched between the rear face 120 and the respective upper end portions 220a, 220b, which in turn may be fixedly connected to rear face 120. In embodiments, each eyelet 500a, 500b may be connected to rear face 120 adj acent to the respective end portions of the carrying handle 800. In embodiments, viewed in the thickness direction z, the respective eyelet 500a and the respective end portion of the carrying handle 800 may be arranged between the respective upper end portion 220a and the rear face 120 (more specifically, the respective eyelet 500a, 500b may be arranged between the respective end portion of the carrying handle 800 and the respective upper end portion 220a, 220b).

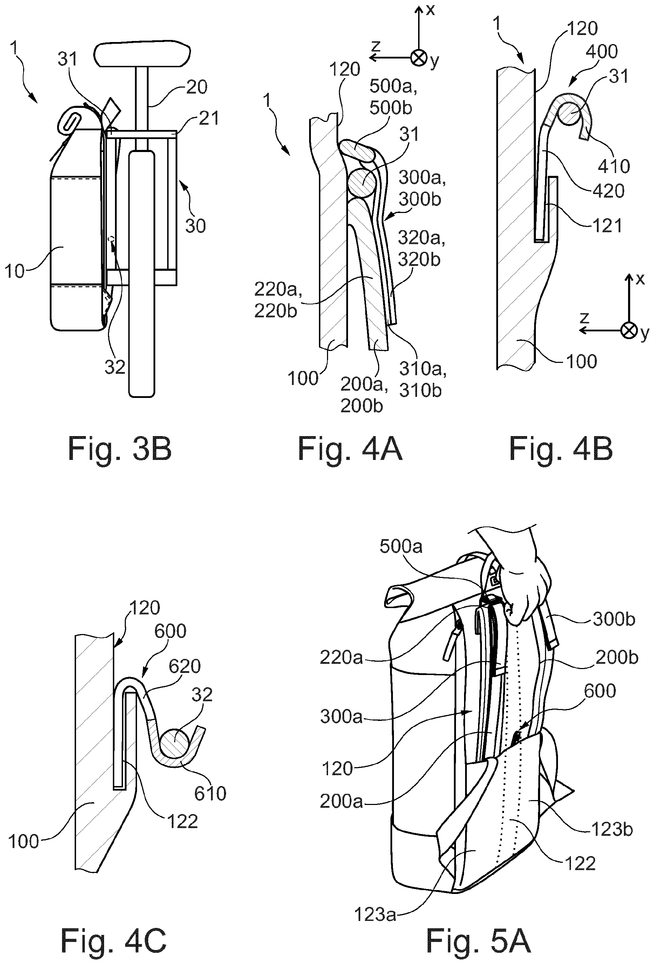

Fig. 2B is a detailed view of the respective eyelet 500a, 500b and the respective flexible coupling element 300a, 300b, more specifically in a decoupled state of the backpack 10. The backpack 10 is in a decoupled state, when the backpack 10 is not coupled to the bicycle rack 21. Fig. 4A is a detailed view of the respective eyelet 500a, 500b and the respective flexible coupling element 300a, 300b in a coupled state of the backpack 10. The backpack 10 is in a coupled state, when the backpack is coupled to the bicycle rack 21. The respective eyelet 500a, 500b may be positioned on the rear face 120 relative to the respective flexible coupling element 300a, 300b such that the respective flexible coupling element 300a, 300b may be translatable through and engageable with the respective eyelet 500a, 500b. The respective eyelet 500a, 500b may be positioned on the rear face 120 relative to the respective flexible coupling element 300a, 300b such that, when the backpack 10 is releasably fastened to the at least one tube 30 (i.e., in the coupled state as shown in Fig. 4A), the at least one tube 30 (more specifically a portion of the at least one tube 30) is arranged between the respective upper end portion 220a, 220b and the respective eyelet 500a, 500b, and more specifically the respective flexible coupling element 300a, 300b may be wound around the at least one tube 31 and engaged with the respective eyelet 500a, 500b such that the at least one tube 30 is clamped to the rear face 120. The respective eyelet 500a, 500b may be positioned on the rear face 120 relative to the respective flexible coupling element 300a, 300b such that, when the backpack 10 is releasably fastened to the at least one tube 30, a portion of the respective eyelet 500a, 500b may be engaged between the respective connection portion 310a, 310b and the respective foldable portion 320a, 320b, and more specifically when the respective foldable portion 320a, 320b is coupled with the respective connection portion 310a, 310b. In more detail, in the coupled state as shown in Fig. 4A, the respective foldable portion 320a, 310b may be wound around the at least one tube 30, translated through the respective eyelet 500a, 500b in a first direction (more specifically towards the top edge 102), folded about a portion of the respective eyelet 500a, 500b in a second direction (more specifically towards the bottom edge 101), and coupled to the respective connection portion 310a, 310b such that the portion of the respective eyelet 500a, 500b is retained to the respective flexible coupling element 300a, 300b, more specifically in the intermediate coupling portion as described above. In the coupled state, the portion of the respective eyelet 500a, 500b may be engaged at the respective intermediate coupling portion due to the coupling between the respective connection portion 310a, 310b and foldable portion 320a, 320b. In other words, the engagement of the respective flexible coupling element 300a, 300b and the respective eyelet 500a, 500b may be provided such that a force is applied on the at least one tube 30 by the respective flexible coupling element 300a, 300b which pushes the at least one tube 30 towards the rear face 30. The force may be substantially parallel to the thickness direction z. More specifically, the at least one tube 30 may be clamped between the rear face 120, the respective eyelet 500a, 500b, the respective flexible coupling element 300a, 300b and/or the respective upper end portion 300a, 300b. Thereby, in the coupled state, a movement and/or slipping of the backpack 10 relative to the bicycle rack 21 may be reduced or prevented during transport. In some embodiments, the rear face 120, the at least one tube 30, the respective upper end portion 220a, 220b and/or the respective flexible coupling element 300a, 300b may comprise a material or coating which may promote frictional force when in contact with other components. More specifically, the material or coating may be applied on the respective components in the area in which the at least one tube 30 (i.e., the portion of the at least one tube) is clamped between the rear face 120, the respective eyelet 500a, 500b, the respective flexible coupling element 300a, 300b and/or the respective upper end portion 300a, 300b. In an embodiment, the rear face 120 may comprise at least one high friction substrate positioned on the rear face 120 between the respective upper end portion 300a, 300b and the respective eyelet 500a, 500b.

Fig. 2C is a detailed view of the suspension element 400 in the decoupled state of the backpack 10 and Fig. 4B is a detailed view of the suspension element 400 in the coupled state of the backpack 10. The suspension element 400 may comprise a suspension hook portion 410 and a suspension strap portion 420. The suspension strap portion 420 may connect the suspension hook portion 410 to the rear face 120. The suspension strap portion 420 may be elastically deformable, and more specifically may comprise an elastically deformable material. In detail, the suspension strap portion 420 may be configured elastically deformable at least along a length of the suspension strap portion 420. As indicated in Figs. 1A, 2C and 4B, the bag 100 may comprise a first pocket 121 on the rear face 120 configured to receive the suspension element 400. In the decoupled state, the suspension element 400, more specifically the suspension strap portion 420 and at least a predominant part of the suspension hook portion 410, may be arranged in the first pocket 121, which may lead to increased comfort and ergonomics when the backpack is worn on a user's back.

Referring to Fig. 1A, the suspension element 400 may be positioned on the rear face 120 between the upper end portions 220a, 220b, more specifically between the pair of flexible coupling elements 300a, 300b. This may be defined with respect to the perpendicular direction y of the backpack 10. The suspension element 400 may be positioned on the rear face substantially between the respective side faces 130, 140 in the perpendicular direction y. The suspension element 400 may be connected to the rear face 120 such that in the coupled state, i.e., when the backpack 10 is coupled with the bicycle rack 21, the suspension element 400 may be positioned between the respective upper end portion 220a, 220b (and/or the respective flexible coupling element 300a, 300b) and the respective eyelet 500a, 500b viewed in the longitudinal direction x. The elasticity of the suspension strap portion 410b may be adapted accordingly (which, of course, may also take into account a variable weight of the backpack 10).

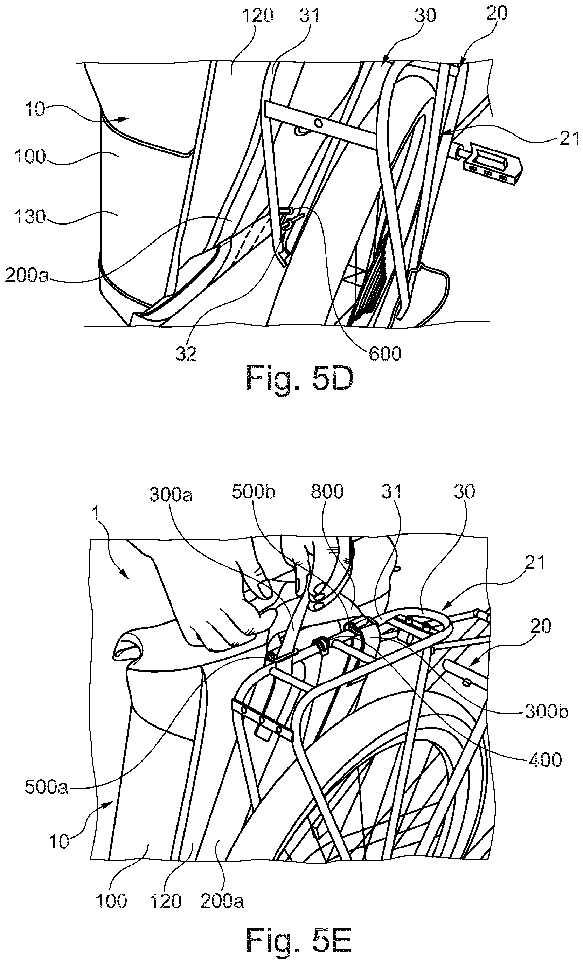

The bicycle rack 21 and the at least one tube 30 are now described in more detail with reference to Figs. 3A, 3B, 5B and 5E. The bicycle rack 21 may comprise at least one tube 30 having a substantially substantially horizontal arranged tube section. The expression "tube" may include a rod-shaped solid body as well as a tubular body with an inner diameter. In the embodiments shown, the at least one tube 30 may comprise a cylindrical cross-section. In other embodiments, the at least one tube may comprise a rectangular or oval cross-section. The suspension element 400 may comprise a shape configured to engage with the at least one tube 30. The expression "substantially horizontal arranged tube section" means that the tube section may be arranged at an orientation that permits the backpack to suspend vertically (or substantially vertically) from the bicycle rack 21, more specifically from the substantially horizontal arranged tube section 31, when the suspension element 400 is engaged with the substantially horizontal arranged tube section 31. The tube section 31 may therefore be arranged in such a way that the backpack 10 may suspend from it without changing its position due to slipping and/or movement caused by gravitational forces. Due to frictional forces that may occur between the tube section 31 and the suspension element 400 in engagement, the tube section 31 does not necessarily have to be arranged exactly horizontally, but can also deviate from the horizontal orientation, e.g. in an angle range of -20° to +20°. In some embodiments, this angle range may be even smaller or larger depending on materials of, or coatings applied to, the bicycle rack 21 and/or the suspension member 400, which may promote or reduce frictional forces between these components. In some embodiments, the expression "substantially horizontally arranged tube section" may also include an arrangement of a substantially horizontally arranged tube section connected to a substantially vertically arranged tube section. If the suspension element 400 is engaged with the vertical tube section and above the horizontal tube section, a vertical displacement of the suspension element 400 can be prevented as the vertical movement of the suspension element 400 may be blocked by the horizontal tube section. Such an arrangement may also allow the backpack 10 to suspend vertically from the tube section 31. Referring to Figs. 5B and 5E, the bicycle rack 21 may comprise a plurality of tubes 30 connected to each other. Although not shown in the Figs., the backpack 10 may comprise more than one suspension elements 400, which may comprise the features of the suspension element 400 as described above. In case at least two suspension elements 400 are provided, each suspension element 400 may be arranged between a respective upper end portion 220a, 220b and a respective side face 130, 140 (viewed in the perpendicular direction y). In some embodiments, the at least two suspension elements 400 may be provided between the upper end portions 220a, 220b (viewed in the perpendicular direction y).

As indicated in Figs. 1A and 1B, the backpack 10 may comprise at least one securing element 600 connected to the rear face 120. The at least one securing element 600 may be positioned on the rear face 120 below the suspension element 400 (viewed in longitudinal direction x) and closer to the bottom edge 101 than to the top edge 102. The at least one securing element 600 may be positioned on the rear face 120 substantially between the respective side faces 130, 140 in the perpendicular direction y. Referring to Fig. 2A, the foldable part 170 as described above is in an unfolded position. As shown in Fig. 2A, in the unfolded position, the backpack 10 may comprise a maximum length lₘₐₓ measured parallel to the longitudinal axis x, more specifically between the respective edges of the bag 100. The at least one securing element 600 may be positioned on the rear face 120 viewed from the bottom edge 101 towards the top edge 102 in a range from 0,2·lₘₐₓ to 0,4·lₘₐₓ. In some embodiments, the backpack 10 may comprise at least two securing elements 600 arranged adjacent (and/or distanced) to each other, e.g., distanced to each other in the longitudinal direction x and/or in the perpendicular direction y. In some embodiments, the at least two securing elements 600 may be equally distributed in the perpendicular direction y between the two side faces 130, 140.

In some embodiments, e.g., as indicated in Figs. 3B and 5C (these Figs. are schematic views of a carrying system 1 according to a second aspect of the present disclosure, wherein the backpack 10 is coupled to a bicycle rack 21), the substantially horizontally arranged tube section 31 may be a first tube section and the at least one tube 30 may comprise at least one second tube section 32 arranged substantially vertically below the first tube section 31. Thus, the first tube section 31 may be distanced vertically to the at least one second tube section 32. The at least one securing element 600 may be configured to be engaged with the at least one tube 30. More specifically, the at least one securing element 600 may be configured to be engaged with the at least one second tube section 32 such that, when the suspension element 400 is engaged with the first tube section 31 and the at least one securing element 600 is engaged with the at least one second tube section 32, the backpack 10 is suspended vertically from and pulled towards the bicycle rack 21. In some embodiments, the at least one second tube section 32 may extend substantially parallel to the first tube section 31. In embodiments, the at least second tube section may also be arranged substantially horizontal. However, this is not required as the at least one securing element 600 may also be engaged with an angled at least one second tube section 32. The at least one securing element 600 may ensure that in the coupled state the backpack 10 is pulled towards the bicycle rack 21 such that the backpack 10 rests against and/or is secured to a side of the bicycle rack 21, more specifically to the first tube section 31 via the suspension element 400 and/or the pair of flexible coupling elements 300a, 300b, and to the at least one second tube section 32 below the first tube section 31 via the at least one securing element 600.

As shown, e.g., in Figs. 1A and 5C, the at least one securing element 600 may comprise a securing hook portion 610 and a securing strap portion 620. The securing strap portion 620 may connect the securing hook portion 610 to the rear face 120. The securing strap portion 620 may be elastically deformable, more specifically securing strap portion 620 an elastically deformable material, which is configured elastically deformable at least along a length of the securing strap portion 620. As shown in Fig. 1A, the bag 100 may comprise a second pocket 122 on the rear face 120 configured to receive the at least one securing element 600. The second pocket 122 may be positioned adjacent to the bottom edge 101 of the bag 100. In the decoupled state, at least a predominant part of the at least one securing element 600 may be arranged in the second pocket 122, which may lead to increased comfort and ergonomics when the backpack 10 is worn on a user's back. The second pocket 122 may be arranged below the first pocket 121 and may have an opening which is oriented towards the top edge 102 or the first pocket 121. Viewed in the perpendicular direction, the second pocket 122 may be arranged centrally between the side faces 130, 140. The elasticity of the securing strap portion 620 may be adapted such that, in the decoupled state, the at least one securing element 600 may be arranged in the second pocket 122, and in the coupled state (i.e., when the at least one securing element 600 is engaged with the at least one second tube section 32), the backpack 10 may be pulled towards and rest against the side of the bicycle rack 21. In Figs. 1A and 1B, the at least one securing element 600 is in the decoupled state, i.e., not engaged with the at least one tube 30, and the at least one securing element 600 is arranged in the second pocket 122. Fig. 4C is a detailed view of the at least one securing element 600 in a coupled state of the backpack 10. In the coupled state, the securing hook portion 610 is engaged with the at least one tube 30, more specifically with the at least one second tube section 32. The securing strap portion 620 is adapted to pull the backpack 10 towards the at least one second tube section 32 such that the backpack 10 rests against the bicycle rack 21.

Referring to Figs. 1A and 1B the bag 100 may comprise a pair of third pockets 123a, 123b on the rear face 120. A respective third pocket 123a, 123b of the pair of third pockets 123a, 123b may be arranged adjacent to a respective side faces 130, 140 of the bag 100 and adjacent to a bottom edge 101 of the bag 100. The second pocket 122 may be positioned on the rear face 120 between the pair of third pockets 123a, 123b. Each third pocket 123 may comprise an opening that is oriented towards the top edge 102.

The respective third pocket 123a, 123b may be configured to receive at least a portion (more specifically, the intermediate portion and/or lower portion) of a respective shoulder strap 200a, 200b of the pair of shoulder straps 200a, 200b. The shoulder straps 200a, 200b may be moved from a wearing position (see, Fig. 1B, wherein the shoulder straps 200a, 200b may extend away from the rear face 120 and may be worn on a wearer's upper body) to a transport position or coupling position (see, Fig. 1A, wherein at least a lower portion of the respective shoulder strap 200a, 200b may be arranged in a respective third pocket 123). In the transport position, at least a portion of the respective shoulder strap 200a, 200b may be stowed in the respective third pocket 123a, 123b. In some embodiments, at least one third of a total length of the respective shoulder strap 200a, 200b may be stored in the respective third pocket 123a, 123b. Thereby, when coupling the backpack 10 to the bicycle rack 21 and during transport, the shoulder straps 200a, 200b may be in a defined position and secured to the bag 100. This may lead to increased comfort and safety during coupling and transport of the backpack 10. Furthermore, the risk of the shoulder straps 200, 200b negatively interfering with the other device (e.g., spokes of the bicycle 20) may be reduced.

Figs. 3A to 5G are schematic views of a carrying system 1 according to an aspect of the present disclosure, wherein the backpack 10 is coupled to a carrying device, more specifically to a bicycle rack 21 of a bicycle 20. The carrying system 1 comprises a carrying device, more specifically a bicycle 20 which comprises a bicycle rack 21. Furthermore, the carrying system 1 comprises a bag device, more specifically a backpack 10, according to the above aspects of the present disclosure. The backpack 10 is releasably coupled to a carrying device, more specifically the bicycle rack 21. In more detail, the backpack 10 may be suspended vertically from and adjacent to the bicycle rack 21 via the suspension element 400. The suspension element 400 may be engaged with the substantially horizontally arranged tube section 31 such that the backpack 10 may be vertically suspended from and adjacent to the bicycle rack 21. The backpack 10 may be releasably fastened to the bicycle rack 21 via the pair of flexible coupling elements 300a, 300b. More specifically, each flexible coupling element 300a, 300b of the pair of flexible coupling elements 300a, 300b may be wound around the at least one tube 30, more specifically around the substantially horizontally arranged tube section 31, such that the backpack 10 is releasably fastened to the bicycle rack 21. Such a carrying system 1 may comprise the effects and advantages as described above for the backpack 10. The carrying system 1, particularly due to the provision of the suspension element 400 and the pair of flexible coupling elements 300a, 300b, may provide improved ergonomics, particularly when coupling the backpack 10 to the bicycle rack 21. Furthermore, a simplified and/or secure coupling of the backpack 10 to the bicycle rack 21 may be provided. The carrying system 1 may provide a secure and comfortable transport of the backpack by means of the carrying device, more specifically the bicycle 20. In embodiments, the bicycle 20 may comprise at least one bicycle rack 21. In examples, the bicycle 20 may comprise, e.g., a front rack and a rear rack, and the backpack 10 may be releasably coupled to the front rack or the rear rack as described herein.

As shown in the Figs., the backpack 10 may be releasably coupled to a side portion of the bicycle rack 21. As shown in the Figs., the bicycle rack 21 may comprise a first side portion and a second side portion. The backpack 10 may be coupled to the first side portion or the second side portion. It should be understood that the backpack 10 according to the aspects of the present disclosure may be releasably coupled to any carrying device that comprises the at least one tube 30 as described above. Although not shown in the Figs., a plurality of backpacks 10 (e.g., two, three, four or more backpacks) according to aspects of the present disclosure may be provided. Each backpack of the plurality of backpacks 10 may be releasably coupled to the carrying device, more specifically the bicycle rack 21, as described above. In embodiments, a first backpack may be releasably coupled to a first side portion of the bicycle rack 21, and at least one second backpack may be releasably coupled to, e.g., the second side portion of the bicycle rack opposite the first side portion. In some embodiments, the components described herein, including the suspension element 400, the pair of flexible coupling elements 400a, 400b and/or the at least one securing element 600 may be also used to releasably couple the backpack 10, e.g., to a top portion of the bicycle rack 21.

The steps of coupling the backpack 10 to the bicycle rack 21 from the decoupled state to the coupled state will now be explained in more detail with reference to Figs. 5A to 5G. First, as shown in Fig. 5A, the user brings the pair of shoulder straps 200a, 200b from the wearing position to the transport position (or coupling position). In the transport position, as shown in Fig. 5A, at least a portion (more specifically, the intermediate portion and/or lower portion) of the respective shoulder strap 200a, 200b is arranged in the respective third pocket 123a, 123b. Thereby, the pair of shoulder straps 200a, 200b is secured to the bag 100, more specifically the rear face 120. In such an arrangement, the risk of the shoulder straps negatively interfering with the other device (e.g. the spokes of the bicycle 20) during transport may be reduced. When transporting the backpack 10, safety can be increased. The backpack 10 shown in Fig. 5A is ready to be coupled to the bicycle rack 21.

First, as shown in Fig. 5B, the user pulls the suspension element 400 out of the first pocket 121 and engages the suspension element 400 with the substantially horizontally arranged tube section 31 (which may be at the top portion of the bicycle rack 21). Thus, in the coupled state, the suspension element 400 is engaged with the substantially horizontally arranged tube section 31 such that the backpack 10 is vertically suspended from and adjacent to the bicycle rack 21. As the backpack 10 suspends from the bicycle rack 21 and is in a defined position relative to the bicycle rack 21, the user can use both hands for all further coupling steps, resulting in improved ergonomics and/or facilitated coupling. Next, the user may engage the at least one securing element 600 with the at least one tube 30 as shown in Fig. 5C, or, the user may fasten the backpack 10 to the at least one tube 30 via the flexible coupling elements 500a, 500b. In examples, the user may fasten the backpack 10 to the at least one tube 30 via the flexible coupling elements 500a, 500b and may then engage the at least one securing element 600 with the at least one tube 30, or vice versa. As shown in Fig. 5C, the user may engage the at least one securing element 600 with the at least one second tube section 32 that may be substantially vertically below the first tube section 31. A distance between the at least one second tube section 32 and the first tube section 31 in the vertical direction may be substantially equal (or larger) to a distance between the at least one securing element 600 and the suspension 400 in the longitudinal direction x of the backpack 10. However, e.g., the elasticity of the securing strap portion 600 may allow for some deviation between the respective distances as mentioned above. In the coupled state as shown in Fig. 5C, the at least one securing element 600 is engaged with the second tube section 32 such that the backpack 10 is suspended vertically from and pulled towards the bicycle rack 21. This is particularly shown in Fig. 5D, wherein the backpack 10 rests against the side portion of the bicycle rack 21. For fastening the backpack 10 to the at least one tube 30 via the flexible coupling elements 500a, 500b as shown in Fig. 5E, the user winds the respective foldable portion 320a, 310b around the at least one tube 30, more specifically the first tube section 31, translates the respective foldable portion 320a, 310b through the respective eyelet 500a, 500b in the first direction (more specifically towards the top edge 102), folds the respective foldable portion 320a, 310b about a portion of the respective eyelet 500a, 500b in the second direction (more specifically towards the bottom edge 101), and couples the respective foldable portion 320a, 310b to the respective connection portion 310a, 310b. Thus, each flexible coupling element 300a, 300b of the pair of flexible coupling elements 300a, 300b is wound around the at least one tube 30, more specifically around the substantially horizontally arranged tube section 31, such that the backpack 10 is releasably fastened to the bicycle rack 21. Furthermore, as shown in Figs. 5E and 5G, the at least one tube 30 is arranged between the respective upper end portion 220a, 220b and the respective eyelet 500a, 500b. More specifically, the respective flexible coupling element 300a, 300b is wound around the at least one tube 30 and engaged with the respective eyelet 500a, 500b such that the at least one tube 30 is clamped to the rear face 120. Furthermore, the respective eyelet 500a, 500b is engaged between the respective connection portion 310a, 310b and the respective foldable portion 320a, 320b, and more specifically the respective foldable portion 320a, 320b is coupled to the respective connection portion 310a, 310b. In other words, the engagement of the respective flexible coupling element 300a, 300b and the respective eyelet 500a, 500b may be provided such that the force is applied on the at least one tube 30 by the respective flexible coupling element 300a, 300b which pushes the at least one tube 30 towards the rear face 120. The at least one tube 30 may be clamped between the rear face 120, the respective eyelet 500a, 500b, the respective flexible coupling element 300a, 300b and/or the respective upper end portion 300a, 300b. Thereby, in the coupled state, a movement and/or slippage of the backpack 10 relative to the bicycle rack 21 may be reduced or prevented during transport.

A third aspect of the present disclosure relates to a use of a bag device, more specifically the backpack 10 according to the first aspect of the present disclosure, for coupling the backpack 10 to a carrying device, more specifically to a bicycle rack 21 of a bicycle 20.

Although the present invention has been described above and is defined in the attached claims, it should be understood that the invention may alternatively be defined in accordance with the following embodiments:
1. A bag device configured to be releasably coupled to a bicycle rack (21), wherein the bicycle rack (21) comprises at least one tube (30) having a substantially horizontally arranged tube section (31), the bag device comprising:
   a bag (100) comprising a rear face (120),
   a pair of flexible coupling elements (300a, 300b) connected to the rear face (120),
   wherein each flexible coupling element (300a, 300b) is configured to be wound around the at least one tube (30) to releasably fasten the bag device to the bicycle rack (21), and a suspension element (400) connected to the rear face (120), wherein the suspension element (400) is configured to be engaged with the substantially horizontally arranged tube section (31) such that, when the suspension element (400) is engaged with the substantially horizontally arranged tube section (31), the bag device is suspended vertically from and adjacent to the bicycle rack (21),
   wherein the suspension element (400) is arranged adjacent to the pair of flexible coupling elements (300a, 300b) such that, when the suspension element (400) is engaged with the substantially horizontally arranged tube section (31), each flexible coupling element (300a, 300b) of the pair of flexible coupling elements (300a, 300b) can be wound around the at least one tube (30).
2. The bag device according to embodiment 1, wherein the bag device is a backpack (10).
3. The bag device according to embodiment 1 or embodiment 2, wherein the bag (100) comprises a bottom edge (101) and a top edge (102), wherein the pair of flexible coupling elements (300a, 300b) is positioned closer to the top edge (102) than to the bottom edge (101).
4. The bag device according to any one of the preceding embodiments, further comprising a pair of shoulder straps (200a, 200b), wherein each shoulder strap (200a, 200b) comprises a lower end portion (210a, 210b) and an upper end portion (220a, 220b) which are respectively connected to the rear face (120), more specifically wherein a respective flexible coupling element (300a, 300b) of the pair of flexible coupling elements (300a, 300b) is connected to the upper end portion (220a, 220b) of a respective shoulder strap (200a, 200b).
5. The bag device according to embodiment 4, wherein the respective flexible coupling element (300a, 300b) is connected to the respective upper end portion (220a, 220b) such that, when the suspension element (400) is engaged with the substantially horizontally arranged tube section (31), each flexible coupling element (300a, 300b) of the pair of flexible coupling elements (300a, 300b) can be wound around the substantially horizontally arranged tube section (31) with which the suspension element (400) is engageable.
6. The bag device according to embodiment 4 or embodiment 5, wherein the respective flexible coupling element (300a, 300b) is connected to a side of the respective shoulder strap (200a, 200b) which faces away from the rear face (120).
7. The bag device according to any one of the preceding embodiments, wherein each flexible coupling element (300a, 300b) comprises a hook-and-loop fastener (340).
8. The bag device according to any one of embodiments 4 to 7, wherein each flexible coupling element (300a, 300b) comprises a connection portion (310a, 310b) and a foldable portion (320a, 320b), wherein a respective connection portion (310a, 310b) is connected to the respective upper end portion (220a, 220b) and wherein a respective foldable portion (320a, 320b) is configured to be releasably coupled with the respective connection portion (310a, 310b).
9. The bag device according to embodiment 7 and embodiment 8, wherein the respective foldable portion (320a, 320b) is configured to be releasably coupled with the respective connection portion (310a, 310b) via the hook-and-loop fastener (340).
10. The bag device according to any one of embodiments 4 to 9, wherein the bag device comprises a pair of eyelets (500a, 500b) connected to the rear face (120), more specifically wherein a respective eyelet (500a, 500b) of the pair of eyelets (500a, 500b) is positioned between the respective flexible coupling element (300a, 300b) and/or respective upper end portion (220a, 220b) and a top edge (102) of the bag (100).
11. The bag device according to embodiment 10, wherein the bag device comprises a carrying handle (800) connected to the rear face (120) at respective end portions of the carrying handle (800) and adjacent a top edge (102) of the bag (100), wherein each eyelet (500a, 500b) is connected to rear face (120) adjacent to the respective end portions of the carrying handle (800).
12. The bag device according to embodiment 10 or embodiment 11, wherein the respective eyelet (500a, 500b) is positioned on the rear face (120) relative to the respective flexible coupling element (300a, 300b) such that the respective flexible coupling element (300a, 300b) is translatable through and engageable with the respective eyelet (500a, 500b).
13. The bag device according to any one of embodiments 10 to 12, wherein the respective eyelet (500a, 500b) is positioned on the rear face (120) relative to the respective flexible coupling element (300a, 300b) such that, when the bag device is releasably fastened to the at least one tube (30), the at least one tube (30) is arranged between the respective upper end portion (220a, 220b) and the respective eyelet (500a, 500b), and more specifically the respective flexible coupling element (300a, 300b) is wound around the at least one tube (31) and engaged with the respective eyelet (500a, 500b) such that the at least one tube (30) is clamped to the rear face (120).
14. The bag device according to any one of embodiments 10 to 13, when dependent on embodiment 8, wherein the respective eyelet (500a, 500b) is positioned on the rear face (120) relative to the respective flexible coupling element (300a, 300b) such that, when the bag device is releasably fastened to the at least one tube (30), a portion of the respective eyelet (500a, 500b) is engaged between the respective connection portion (310a, 310b) and the respective foldable portion (320a, 320b), and more specifically when the respective foldable portion (320a, 320b) is coupled with the respective connection portion (310a, 310b).
15. The bag device according to any one of the preceding embodiments, wherein the suspension element (400) comprises a suspension hook portion (410) and a suspension strap portion (420), wherein the suspension strap portion (420) connects the suspension hook portion (410) to the rear face (120), more specifically wherein the suspension strap portion (420) is elastically deformable.
16. The bag device according to any one of the preceding embodiments, wherein the bag (100) comprises a first pocket (121) on the rear face (120) configured to receive the suspension element (400).
17. The bag device according to any one of embodiments 4 to 16, wherein the suspension element (400) is positioned on the rear face (120) between the upper end portions (220a, 220b), more specifically between the pair of flexible coupling elements (300a, 300b).
18. The bag device according to any one of embodiments 3 to 17, further comprising at least one securing element (600) connected to the rear face (120), wherein the at least one securing element (600) is positioned on the rear face (120) below the suspension element (400) and closer to the bottom edge (101) than to the top edge (102).
19. The bag device according to embodiment 18, wherein the substantially horizontally arranged tube section (31) is a first tube section and wherein the at least one tube (30) comprises at least one second tube section (32) arranged substantially vertically below the first tube section (31), wherein the at least one securing element (600) is configured to be engaged with the at least one second tube section (32) such that, when the suspension element (400) is engaged with the first tube section (31) and the at least one securing element (600) is engaged with the at least one second tube section (32), the bag device is suspended vertically from and pulled towards the bicycle rack (21).
20. The bag device according to embodiment 18 or embodiment 19, wherein the at least one securing element (600) comprises a securing hook portion (610) and a securing strap portion (620), wherein the securing strap portion (620) connects the securing hook portion (610) to the rear face (120), more specifically wherein the securing strap portion (620) is elastically deformable.
21. The bag device according to any one of the preceding embodiments, wherein the bag (100) comprises a second pocket (122) on the rear face (120) configured to receive the at least one securing element (600), more specifically wherein the second pocket (122) is positioned adjacent to a bottom edge (101) of the bag (100).
22. The bag device according to any one of the preceding embodiments, wherein the bag (100) comprises a pair of third pockets (123a, 123b) on the rear face (120), wherein a respective third pocket (123a, 123b) of the pair of third pockets (123a, 123b) is arranged adjacent to a respective side faces (130, 140) of the bag (100) and adjacent to a bottom edge (101) of the bag (100).
23. The bag device according to embodiment 22, wherein the second pocket (122) is positioned on the rear face (120) between the pair of third pockets (123a, 123b).
24. The bag device according embodiment 22 or embodiment 23, when dependent on embodiment 4, wherein the respective third pocket (123a, 123b) is configured to receive at least a portion of a respective shoulder strap (200a, 200b) of the pair of shoulder straps (200a, 200b).
25. The bag device according to any one of the preceding embodiments, wherein the bag (100) comprises an opening (180) and wherein the bag device comprises a closure element (700) configured to close the opening (180), more specifically wherein the bag (100) comprises a foldable part (170) adjacent a top edge (102) of the bag (100), wherein in a folded position, the opening (180) is closed, and wherein the closure element (700) is configured to retain the foldable part in the folded position.
26. A carrying system (1), comprising:
   a bicycle (20) comprising a bicycle rack (21), and
   a bag device according to any one of the preceding embodiments,
   wherein the bag device is releasably coupled to the bicycle rack (21), more specifically wherein the bag device is suspended vertically from and adjacent to the bicycle rack (21) via the suspension element (400) and wherein the bag device is releasably fastened to the bicycle rack (21) via the pair of flexible coupling elements (300a, 300b).
   27. The carrying system (1) according to embodiment 26, wherein the bicycle rack (21) comprises at least one tube (30) having a substantially horizontally arranged tube section (31).
   28. The carrying system (1) according to embodiment 27, wherein the suspension element (400) is engaged with the substantially horizontally arranged tube section (31) such that the bag device is vertically suspended from and adjacent to the bicycle rack (21).
   29. The carrying system (1) according to embodiment 27 or embodiment 28, wherein each flexible coupling element (300a, 300b) of the pair of flexible coupling elements (300a, 300b) is wound around the at least one tube (30), more specifically around the substantially horizontally arranged tube section (31), such that the bag device is releasably fastened to the bicycle rack (21).
   30. The carrying system (1) according to any one of embodiments 27 to 29, when dependent on embodiments 4 and 8, wherein the at least one tube (30) is arranged between the respective upper end portion (220a, 220b) and the respective eyelet (500a, 500b), and more specifically wherein the respective flexible coupling element (300a, 300b) is wound around the at least one tube (30) and engaged with the respective eyelet (500a, 500b) such that the at least one tube (30) is clamped to the rear face (120).
   31. The carrying system (1) according to any one of embodiments 26 to 30, when dependent on embodiments 8 and 10, wherein the respective eyelet (500a, 500b) is engaged between the respective connection portion (310a, 310b) and the respective foldable portion (320a, 320b), and more specifically wherein the respective foldable portion (320a, 320b) is coupled with the respective connection portion (310a, 310b).
   32. The carrying system (1) according to any one of embodiments 26 to 31, when dependent on embodiment 18, wherein the substantially horizontally arranged tube section (31) is a first tube section and wherein the at least one tube (30) comprises a second tube section (32) arranged substantially vertically below the first tube section (31), wherein the at least one securing element (600) is engaged with the second tube section (32) such that the bag device is suspended vertically from and pulled towards the bicycle rack (21).
   33. Use of a bag device according to any one of embodiments 1 to 25 for coupling the bag device to a bicycle rack (21).

### REFERENCE NUMERALS

- x: longitudinal axis
- y: perpendicular axis
- z: thickness axis
- d: distance
- w: width
- lₘₐₓ: maximum length
- 1: carrying system
- 10: backpack
- 20: bicycle
- 21: bicycle rack
- 30: at least one tube
- 31: first tube section
- 32: second tube section
- 100: bag
- 101: bottom edge
- 102: top edge
- 110: front face
- 120: rear face
- 121: first pocket
- 122: second pocket
- 123a, b: third pockets
- 130: adjacent face, left-side face
- 140: adjacent face, right-side face
- 170: foldable part
- 180: opening
- 200a, b: shoulder straps
- 210a, b: lower end portions
- 220a, b: upper end portions
- 300a, b: flexible coupling elements
- 310a, b: connecting portion
- 320a, b: foldable portion
- 330a, b: intermediate coupling portion
- 340: hook-and-loop fastener
- 341a, b: first band
- 342a, b: second band
- 400: suspension element
- 410: suspension hook portion
- 420: suspension strap portion
- 500a, b: eyelets
- 600: securing element
- 610: securing hook portion
- 620: securing strap portion
- 700: closure element
- 800: carrying handle

## Claims

1. A backpack (10) configured to be releasably coupled to a bicycle rack (21), wherein the bicycle rack (21) comprises at least one tube (30) having a substantially horizontally arranged tube section (31), the backpack (10) comprising:
a bag (100) comprising a rear face (120),
a pair of shoulder straps (200a, 200b), wherein each shoulder strap (200a, 200b) comprises a lower end portion (210a, 210b) and an upper end portion (220a, 220b) which are respectively connected to the rear face (120),
a pair of flexible coupling elements (300a, 300b), wherein a respective flexible coupling element (300a, 300b) is connected to the upper end portion (220a, 220b) of a respective shoulder strap (200a, 200b) and wherein each flexible coupling element (300a, 300b) is configured to be wound around the at least one tube (30) to releasably fasten the backpack (10) to the bicycle rack (21), and
a suspension element (400) connected to the rear face (120), wherein the suspension element (400) is configured to be engaged with the substantially horizontally arranged tube section (31) such that, when the suspension element (400) is engaged with the substantially horizontally arranged tube section (31), the backpack (10) is suspended vertically from and adjacent to the bicycle rack (21),
wherein the suspension element (400) is arranged adjacent to the pair of flexible coupling elements (300a, 300b) such that, when the suspension element (400) is engaged with the substantially horizontally arranged tube section (31), each flexible coupling element (300a, 300b) of the pair of flexible coupling elements (300a, 300b) can be wound around the at least one tube (30).

2. The backpack (10) according to claim 1, wherein the respective flexible coupling element (300a, 300b) is connected to the respective upper end portion (220a, 220b) such that, when the suspension element (400) is engaged with the substantially horizontally arranged tube section (31), each flexible coupling element (300a, 300b) of the pair of flexible coupling elements (300a, 300b) can be wound around the substantially horizontally arranged tube section (31) with which the suspension element (400) is engageable.

3. The backpack (10) according to claim 1 or claim 2, wherein the respective flexible coupling element (300a, 300b) is connected to a side of the respective shoulder strap (200a, 200b) which faces away from the rear face (120), and more specifically wherein the bag (100) comprises a bottom edge (101) and a top edge (102), wherein the pair of flexible coupling elements (300a, 300b) is positioned closer to the top edge (102) than to the bottom edge (101).

4. The backpack (10) according to any one of the preceding claims, wherein each flexible coupling element (300a, 300b) comprises a connection portion (310a, 310b) and a foldable portion (320a, 320b), wherein a respective connection portion (310a, 310b) is connected to the respective upper end portion (220a, 220b) and wherein a respective foldable portion (320a, 320b) is configured to be releasably coupled with the respective connection portion (310a, 310b), more specifically wherein the respective foldable portion (320a, 320b) is configured to be releasably coupled with the respective connection portion (310a, 310b) via a hook-and-loop fastener (340).

5. The backpack (10) according to any one of the preceding claims, wherein the backpack (10) comprises a pair of eyelets (500a, 500b) connected to the rear face (120), more specifically wherein a respective eyelet (500a, 500b) of the pair of eyelets (500a, 500b) is positioned between the respective upper end portion (220a, 220b) and a top edge (102) of the bag (100).

6. The backpack (10) according to claim 5, wherein the respective eyelet (500a, 500b) is positioned on the rear face (120) relative to the respective flexible coupling element (300a, 300b) such that the respective flexible coupling element (300a, 300b) is translatable through and engageable with the respective eyelet (500a, 500b).

7. The backpack (10) according to claim 5 or claim 6, wherein the respective eyelet (500a, 500b) is positioned on the rear face (120) relative to the respective flexible coupling element (300a, 300b) such that, when the backpack (10) is releasably fastened to the at least one tube (30), the at least one tube (30) is arranged between the respective upper end portion (220a, 220b) and the respective eyelet (500a, 500b), and more specifically the respective flexible coupling element (300a, 300b) is wound around the at least one tube (31) and engaged with the respective eyelet (500a, 500b) such that the at least one tube (30) is clamped to the rear face (120).

8. The backpack (10) according to any one of the preceding claims, wherein the suspension element (400) comprises a suspension hook portion (410) and a suspension strap portion (420), wherein the suspension strap portion (420) connects the suspension hook portion (410) to the rear face (120), more specifically wherein the suspension strap portion (420) is elastically deformable.

9. The backpack (10) according to any one of the preceding claims, wherein the suspension element (400) is positioned on the rear face (120) between the upper end portions (220a, 220b), more specifically between the pair of flexible coupling elements (300a, 300b).

10. The backpack (10) according to any one of the preceding claims, further comprising at least one securing element (600) connected to the rear face (120), wherein the at least one securing element (600) is positioned on the rear face (120) below the suspension element (400) and closer to a bottom edge (101) of the bag (100) than to a top edge (102) of the bag (100).

11. The backpack (10) according to claim 10, wherein the substantially horizontally arranged tube section (31) is a first tube section and wherein the at least one tube (30) comprises at least one second tube section (32) arranged substantially vertically below the first tube section (31), wherein the at least one securing element (600) is configured to be engaged with the at least one second tube section (32) such that, when the suspension element (400) is engaged with the first tube section (31) and the at least one securing element (600) is engaged with the at least one second tube section (32), the backpack (10) is suspended vertically from and pulled towards the bicycle rack (21).

12. The backpack (10) according to claim 10 or claim 11, wherein the at least one securing element (600) comprises a securing hook portion (610) and a securing strap portion (620), wherein the securing strap portion (620) connects the securing hook portion (610) to the rear face (120), more specifically wherein the securing strap portion (620) is elastically deformable.

13. The backpack (10) according to any one of the preceding claims, wherein the bag (100) comprises a pair of third pockets (123a, 123b) on the rear face (120), wherein a respective third pocket (123a, 123b) of the pair of third pockets (123a, 123b) is arranged adjacent to a respective side face (130, 140) of the bag (100) and adjacent to a bottom edge (101) of the bag (100), more specifically wherein the respective third pocket (123a, 123b) is configured to receive at least a portion of a respective shoulder strap (200a, 200b) of the pair of shoulder straps (200a, 200b).

14. A carrying system (1), comprising:
a bicycle (20) comprising a bicycle rack (21), and
a backpack (10) according to any one of the preceding claims,
wherein the backpack (10) is releasably coupled to the bicycle rack (21), more specifically wherein the backpack (10) is suspended vertically from and adjacent to the bicycle rack (21) via the suspension element (400) and wherein the backpack (10) is releasably fastened to the bicycle rack (21) via the pair of flexible coupling elements (300a, 300b).

15. Use of a backpack (10) according to any one of claims 1 to 13 for coupling the backpack (10) to a bicycle rack (21).
